# EUROPEAN PATENT APPLICATION

(11) **EP 1 433 880 A1**
(43) Date of publication of application: **30.06.2004**
(21) Application number: 01972582.9
(22) Date of filing: 28.09.2001
(51) Int. Cl.: C25D 1/02

(54) **ELECTROFORMING SYSTEM AND ELECTROFORMING METHOD**

(71) Applicant: Inou Co., Ltd., Fukuoka 839-0682 (JP)
(72) Inventor: ODA, Tokuji, Kurume-shi, Fukuoka 830-0037 (JP); ITIKAWA, Yutaka, Mizuma-gun, Fukuoka 830-0211 (JP)
(74) Representative: Siegert, Georg, Dr.
(86) International application number: PCT/JP2001/008540
(87) International publication number: WO 2003/031693

(57) **Abstract**

An electroforming apparatus and an electroforming method that are capable of readily shaping an electroformed piece with high accuracy (particularly shaping of a spot-faced configuration or the like in a hollow portion) are provided. An electroforming tank 1 is provided with an air supply device 11 to form an air bubble layer 12 on the surface 3 of an electrolyte 2. A tapered portion 52 is formed at the upper end of a primarily electroformed piece 51 in the air bubble layer 12 by controlling the vertical movement of a bus 50. A secondarily electroformed piece 53 is formed on the primarily,electroformed piece 51 and the bus 50, whereby a spot-faced portion 55 patterned on the tapered portion 52 is formed in a hollow portion 54 of the secondarily electroformed piece 53.

## Description

### TECHNICAL FIELD TO WHICH THE INVENTION PERTAINS

The present invention relates to an electroforming apparatus and an electroforming method. More particularly, the present invention relates to an apparatus and method for producing, by electroforming, tubular members (known as "ferrules") that may be used in connector terminal portions for connecting optical fibers or the like.

### BACKGROUND OF THE INVENTION

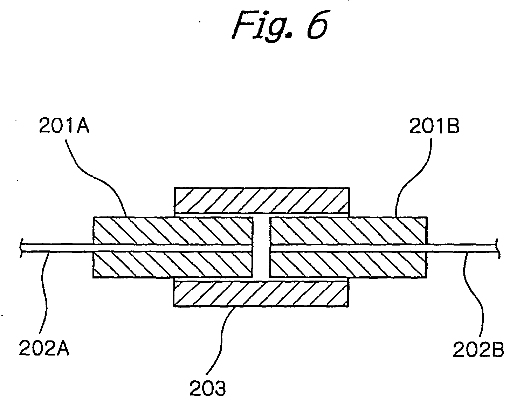

In connector terminal portions of optical fiber cables, tubular members (known as "ferrules") are used to secure optical fibers, which are to be connected to each other, coaxially at a predetermined position. Fig. 6 shows an example of connection of optical fibers using such ferrules. As illustrated in the figure, optical fibers 202A and 202B are inserted into ferrules 201A and 201B, respectively. The ferrules 201A and 201B are fitted into a sleeve 203 and disposed so that the respective ends of the optical fibers 202A and 202B face each other.

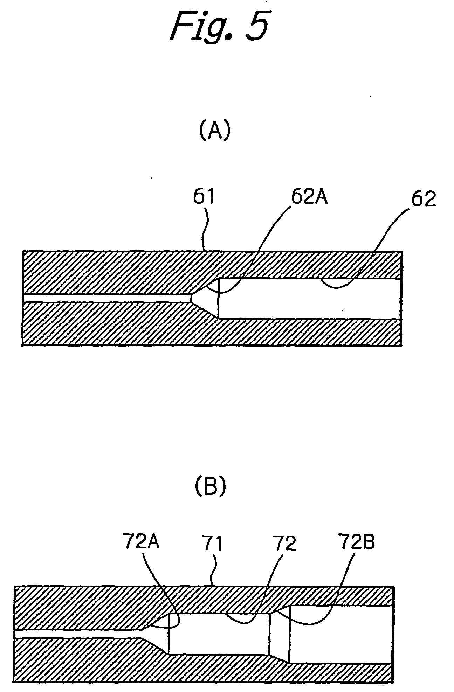

Ferrules made of ceramics have heretofore been used as those stated above. However, ceramic ferrules are difficult to machine and cost a great deal to produce. Further, there are cases where a hollow portion of a ferrule (i.e. a portion of the ferrule into which an optical fiber is to be inserted) requires a spot-faced portion (step portion) (see Fig. 5). It is difficult to form such a spot-faced portion in ceramic ferrules by fabrication process.

Under these circumstances, a method of producing metallic ferrules by electroforming is proposed in the publications of WO00/31574, WO00/48270, WO01/48271, Japanese Patent Application Unexamined Publication (KOKAI) Nos. Sho 59-3859 and Hei 12-162470, etc. In such an electroforming type ferrule producing apparatus, for example, a wire serving as a pattern member for electroforming is placed in an electrolyte filled in an electroforming tank to perform electroforming, thereby obtaining a hollow electroformed piece. Conventionally, the hollow portion of the electroformed piece is subjected to fabrication process to form a spot-faced portion in the hollow portion.

However, connection of optical fibers needs to be made with an extremely high degree of accuracy. Accordingly, ferrules used for the optical fiber connection require extremely high quality in terms of dimensions (accuracy in units of micrometers or less is required). Therefore, it is not easy to form a spot-faced portion with a satisfactorily high degree of accuracy by the conventional method in which a metallic ferrule is subjected to fabrication process. It is particularly difficult to form a spot-faced portion in the inner part of the hollow portion and also difficult to form spot-faced portions successively in a two- or three-step structure by fabrication process.

The present invention was made in view of the above-described problems, and it is an object of the present invention to provide an electroforming apparatus and an electroforming method that are capable of readily shaping an electroformed piece with high accuracy (particularly shaping of a spot-faced configuration or the like in the hollow portion).

### DISCLOSURE OF THE INVENTION

An electroforming apparatus according to the present invention includes an electroforming tank (e.g. an electroforming tank 1) filled with an electrolyte; bubble region forming means (e.g. an air supply device 11) for forming a bubble region (e.g. an air bubble layer 12) on the top of the electrolyte filled in the electroforming tank; positioning means (e.g. a jig conveyor 20) for positioning a pattern member (e.g. a bus 50) for electroforming in the electroforming tank so that at least a part of the pattern member is put in the bubble region; a first electrode (e.g. an upper bus securing part 45) electrically connected to the pattern member; a second electrode (e.g. an anode electrodes 16) provided in the electroforming tank; a power supply (e.g. a programmable power supply 18) for applying a voltage between the first and second electrodes; and shaping means (e.g. a mechanism for vertically moving a bus accommodating unit 33 of a retaining jig 30) for shaping an electroformed piece formed around the periphery of the pattern member in the bubble region. Thus, the configuration of the electroformed piece (e.g. a tapered portion 52 of a primarily electroformed piece 51) formed in the bubble region can readily be shaped with high accuracy. More specifically, the current density produced in the bubble region is low, and hence the amount of electrolytically deposited substance in the bubble region is small. Consequently, a thick electroformed piece is formed on a portion of the pattern member that has been put in the bubble region for a long period of time, whereas a thin electroformed piece is formed on a portion of the pattern member than has been put in the bubble region for a short period of time. Accordingly, the electroformed piece can be shaped into a desired configuration (e.g. a configuration having a tapered portion 52 at the upper end) by adjusting the positional relationship between the bubble region and the pattern member during the electroforming process. Thus, the electroformed piece can be shaped into a desired configuration in the stage of electroforming process. Therefore, it is possible to eliminate time and labor which would otherwise be required for fabrication process.

In the electroforming apparatus according to the present invention, the shaping means shapes the electroformed piece formed around the periphery of the pattern member by controlling the vertical movement of the pattern member. Thus, it is possible to vary the positional relationship between the bubble region and the pattern member and hence possible to adjust the amount of electrolytically deposited substance on the upper end portion of the electroformed piece. Accordingly, the configuration of the electroformed piece (e.g. a tapered configuration at the upper end of the electroformed piece) can readily be shaped with high accuracy.

In the electroforming apparatus according to the present invention, the shaping means shapes the electroformed piece formed around the periphery of the pattern member by varying the thickness of the bubble region. Thus, the positional relationship between the bubble region and the pattern member can be varied without the need to provide a mechanism for vertically moving the pattern member. Accordingly, shaping of the electroformed piece (e.g. shaping of the upper end of the electroformed piece into a tapered configuration) can readily be performed with high accuracy.

In the electroforming apparatus according to the present invention, electroforming is further performed by using the electroformed piece (primarily electroformed piece 51) shaped by the shaping means as a pattern member. Thus, the configuration of a hollow portion (e.g. a hollow portion 54) of an electroformed piece (e.g. a secondarily electroformed piece 53) obtained as a result can readily be shaped with high accuracy. For example, to form a spot-faced configuration (e.g. a spot-faced portion 62A or 72A) in a hollow portion (e.g. a hollow portion 62 or 72) of a tubular member (e.g. a ferrule 61 or 71) for an optical fiber connector terminal or the like, a tapered configuration is formed on an electroformed piece (e.g. a primarily electroformed piece 51) serving as a pattern by the shaping means, and an electroformed piece (e.g. a secondarily electroformed piece 53) is further formed on the electroformed piece serving as a pattern. Thus, it is possible to form a hollow portion having a spot-faced configuration patterned on the electroformed piece serving as a pattern.

In the electroforming method according to the present invention, a bubble region is formed in the upper part of an electroforming tank. A pattern member for electroforming is positioned in the electroforming tank so that at least a part of the pattern member is put in the bubble region, and an electroformed piece formed around the periphery of the pattern member is shaped in the bubble region. Thus, the electroformed piece formed in the bubble region can readily be shaped with high accuracy by making use of the fact that the amount of electrolytically deposited substance is small in the bubble region. Accordingly, the electroformed piece can be shaped into a desired configuration in the stage of electroforming process. Therefore, it is possible to eliminate time and labor which would otherwise be required for fabrication process.

In the electroforming method according to the present invention, the electroformed piece formed around the periphery of the pattern member is shaped in the bubble region by vertically moving the pattern member. Thus, shaping of the electroformed piece can readily be performed with high accuracy.

In the electroforming method according to the present invention, the electroformed piece formed around the periphery of the pattern member is shaped in the bubble region by adjusting the thickness of the bubble region. Thus, shaping of the electroformed piece can readily be performed with high accuracy.

In the electroforming method according to the present invention, electroforming is further performed by using the electroformed piece shaped in the bubble region as a pattern member. Thus, the configuration of a hollow portion (e.g. the configuration of a spot-faced portion 62A or 72A in a hollow portion 62 or 72 of a ferrule 61 or 71) of the electroformed piece obtained as a result can readily be shaped with high accuracy.

### BRIEF DESCRIPTION OF THE DRAWINGS

Fig. 1 is a structural view showing an electroforming apparatus in an embodiment of the present invention.
Fig. 2 is a perspective view showing a retaining jig.
Fig. 3 is a perspective view showing the way in which a bus is fitted to an upper bus securing part (cathode electrode).
Fig. 4 is a diagram showing an electroforming procedure, illustrating the steps of forming a primarily electroformed piece and a secondarily electroformed piece.
Fig. 5 is a diagram showing an electroforming procedure, illustrating the steps of separating a secondarily electroformed piece from a bus and a primarily electroformed piece.
Fig. 5 is a sectional view showing examples of ferrules produced by an embodiment of the present invention.
Fig. 6 is a sectional view showing an example of connection of optical fibers with ferrules.

### PREFERRED MODE FOR CARRYING OUT THE INVENTION

Embodiments of the present invention will be described below on the basis of the accompanying drawings.

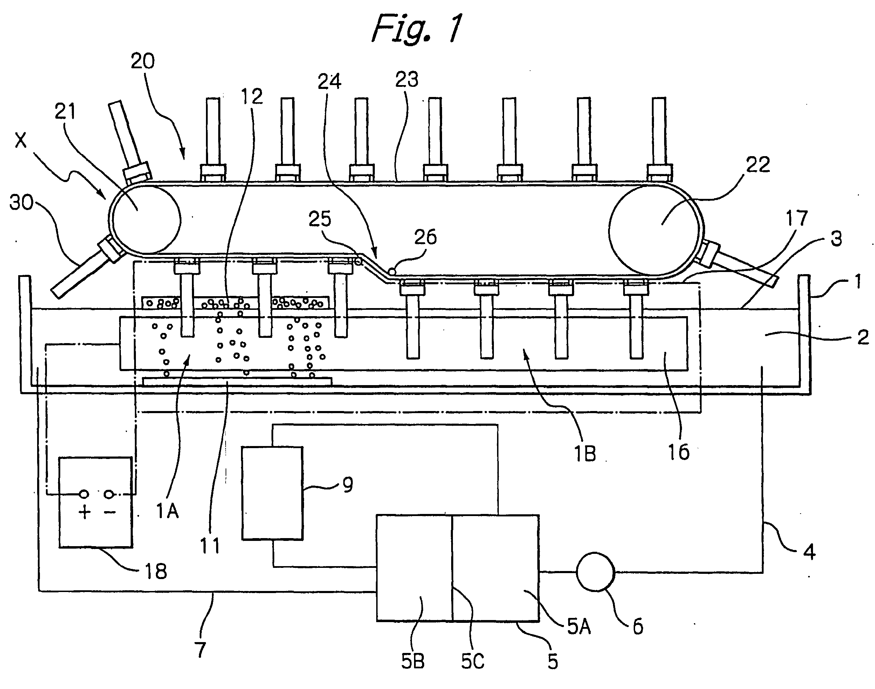

Fig. 1 shows an electroforming apparatus according to a first embodiment of the present invention.

As illustrated in the figure, the electroforming apparatus has an electroforming tank 1 having an opening at the top thereof. The electroforming tank 1 is filled with an electrolyte (electroforming fluid) 2. As the electrolyte, for example, a nickel sulfamate solution mixed with a brightener and a pit-preventing agent may be used.

The electroforming tank 1 is connected to a control tank 5 through supply piping 4 and discharge piping 7. The control tank 5 has a supply chamber 5A communicating with the supply piping 4 and a collecting chamber 5B communicating with the discharge piping 7. The supply chamber 5A and the collecting chamber 5B are partitioned from each other by an electrolyte isolating plate 5C.

With the above-described arrangement, the electrolyte 2 in the electroforming tank 1 is collected into the collecting chamber 5B of the control tank 5 through the discharge piping 7. The electrolyte 2 containing impurities, which has been collected into the collecting chamber 5B, is sent into the supply chamber 5A after it has been filtered through a filter 9. The electrolyte 2 in the supply chamber 5A is appropriately controlled in terms of electrolyte temperature, hydrogen ion concentration, hardness, etc. For example, the electrolyte temperature is adjusted to from 45 to 55°C. The hydrogen ion concentration is adjusted to from 4.0 to 4.5 pH. The hardness of the electroformed piece is appropriately adjusted by controlling the amount of brightener added. The filtered and appropriately controlled electrolyte 2 in the supply chamber 5A is supplied to the electroforming tank 1 through the supply piping 4 by a circulating pump 6. The supply of the electrolyte 2 is controlled so that the surface 3 of the electrolyte 2 in the electroforming tank 1 is kept at a predetermined level.

A jig conveyor 20 is provided above the electroforming tank 1. The jig conveyor 20 conveys and positions retaining jigs 30 above the electroforming tank 1. The jig conveyor 20 has a roller 21 of small diameter and a roller 22 of large diameter and further has a belt 23 passed around the rollers 21 and 22. The rollers 21 and 22 are driven to rotate by a driving means (not shown), whereby the belt 23 circulates counterclockwise as viewed in the figure.

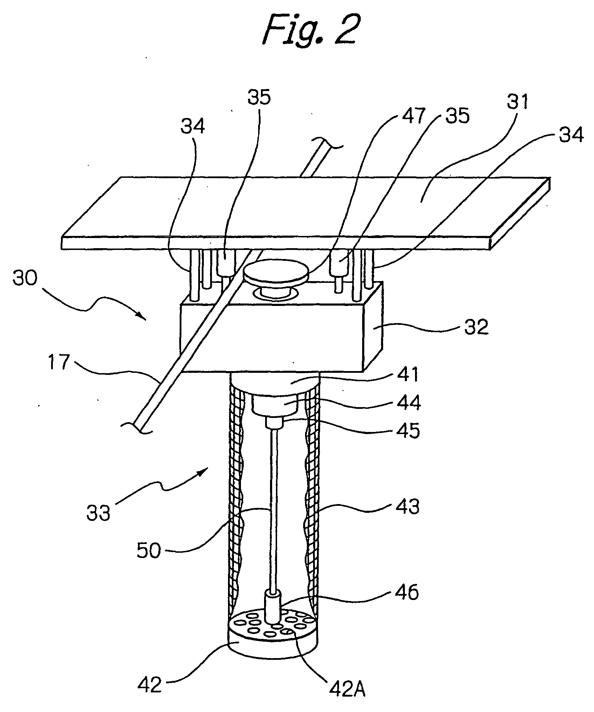

A plurality of retaining jigs 30 are secured to the outer periphery of the belt 23. Each retaining jig 30 retains a bus 50 serving as a pattern member for electroforming (detailed later in connection with Fig. 2). As the belt 23 circulates, the retaining jigs 30 are conveyed along the outer periphery of the belt 23. Retaining jigs 30 secured to a portion of the belt 23 that circulates below the rollers 21 and 22 are partially dipped in the electrolyte 2. In this state, the retaining jigs 30 move from the roller 21 toward the roller 22. It should be noted that a bus 50 is loaded onto each retaining jig 30 at a loading position X in the vicinity of the roller 21.

The belt 23 is stretched approximately horizontally above the rollers 21 and 22. Below the rollers 21 and 22, on the other hand, the belt 23 is guided by guide rollers 25 and 26 at a predetermined position to form a step 24. The height of the step 24 corresponds to the difference in diameter between the rollers 21 and 22. As it passes the step 24, each retaining jig 30 conveyed by the jig conveyor 20 descends by a distance corresponding to the height of the step 24.

The electroforming tank 1 is divided into two sections at the step 24. That is, a primary electroforming section 1A is defined on the upstream side (roller 21 side) of the step 24, and a secondary electroforming section 1B on the downstream side (roller 22 side) of the step 24. As will be described later, primary electroforming using bubbles is carried out in the primary electroforming section 1A. In the secondary electroforming section 1B, secondary electroforming is performed on the primarily electroformed piece formed in the primary electroforming section 1A.

An air supply device 11 is provided in the lower part of the primary electroforming section 1A of the electroforming tank 1. The air supply device 11 generates a large number of air bubbles in the electrolyte 2 in the primary electroforming section 1A. The air bubbles form an air bubble layer 12 on the surface 3 of the electrolyte 2. It should be noted that the amount of air supplied from the air supply device 11 is controllable by control means (not shown). Thus, the thickness of the air bubble layer 12 (i.e. the height from the fluid surface 3) is adjustable.

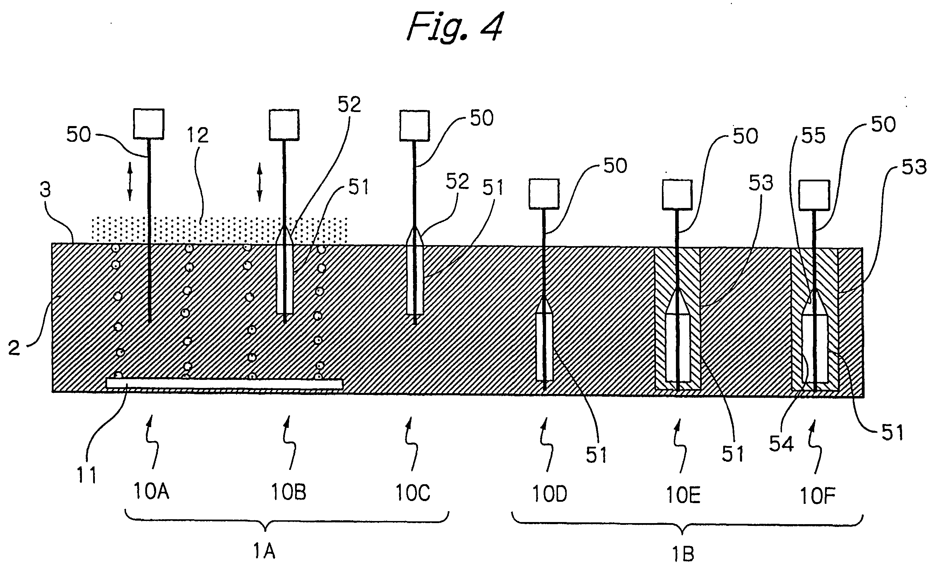

In the primary electroforming process, the upper end portion of the primarily electroformed piece is shaped into a desired configuration (e.g. a tapered configuration) in the air bubble layer 12. When the retaining jig 30 is carried into the secondary electroforming section 1B beyond the step 24, the height of the retaining jig 30 lowers by a length corresponding to the height of the step 24. Consequently, the bus 50 is dipped into the electrolyte 2 as far as a portion thereof above the upper end of the primarily electroformed piece (i.e. the portion put in the air bubble layer 12 during the primary electroforming process). As a result, the secondary electroforming is performed on the outer periphery of the primarily electroformed piece and the outer periphery of the bus 50 above the upper end of the primarily electroformed piece (see Fig. 4).

A pair of anode electrodes 16 are provided in the electrolyte 2 in the electroforming tank 1 (only one anode electrode 16 is shown in Fig. 1). The anode electrodes 16 extend over from the primary electroforming section 1A to the secondary electroforming section 1B in the direction of conveying the retaining jigs 30 (the horizontal direction in the figure). The anode electrodes 16 are disposed to face each other across the retaining jigs 30. Each anode electrode 16 is formed by accommodating metal pellets (e.g. nickel pellets) for electroforming in a mesh-shaped or perforated casing made, for example, of titanium steel. The casing of the anode electrode 16 is connected to the plus electrode of a programmable power supply 18.

An electrode wire 17 made of an electrically conductive wire is stretched between the electroforming tank 1 and the jig conveyor 20 along the upper ends of the retaining jigs 30. The electrode wire 17 is connected to the minus electrode of the programmable power supply 18.

Fig. 2 shows the details of one retaining jig 30.

As illustrated in the figure, the retaining jig 30 includes a mounting plate 31 secured to the belt 23 of the jig conveyor 20. A support block 32 is vertically movably supported under the mounting plate 31 through a plurality of connecting shafts 34. A bus accommodating unit 33 is supported by the support block 32. The bus accommodating unit 33 is rotatable about its own axis.

The bus accommodating unit 33 has a tubular member 43 with an upper base 41 and a lower base 42 provided at the upper and lower ends, respectively. The bus 50 is coaxially accommodated in the bus accommodating unit 33. The tubular member 43 is a pipe-shaped member formed from titanium, for example, so that the electrolyte 2 and bubbles from the air supply device 11 can be introduced into the tubular member 43. The tubular member 43 is constructed in a mesh-shaped structure or formed with a plurality of holes. The lower base 42 is also formed with a plurality of holes 42A, so that the electrolyte 2 and bubbles from the air supply device 11 are introduced into the tubular member 43 through the holes 42A.

The upper base 41 is axially rotatably supported by the support block 32 and driven to rotate by a driving motor (not shown) provided in the support block 32. Thus, the bus accommodating unit 33, together with the bus 50, is driven to rotate about the axis.

Actuators 35 are provided between the mounting plate 31 and the support block 32. As each actuator 35, for example, an air cylinder or an electromagnetic cylinder is used. The drive of the actuators 35 causes the support block 32 to move vertically along the connecting shafts 34 disposed approximately vertically. Thus, the bus accommodating unit 33 can be moved vertically during the electroforming process.

A tension unit 44 and an upper bus securing part 45 are secured to the upper base 41. A lower bus securing part 46 is secured to the lower base 42. The bus 50 is disposed on the center axis of the tubular member 43 and secured at the upper and lower ends thereof to the upper bus securing part 45 and the lower bus securing part 46. Thus, as the bus accommodating unit 33 rotates, the bus 50 rotates about its own axis. It should be noted that an appropriate tension is applied to the bus 50 by the tension unit 44.

An electrode roller 47 is rotatably mounted on the top of the support block 32. The electrode roller 47 contacts the electrode wire 17. An electrically conductive member (e.g. electric wire; not shown in the figure) is provided to extend through the support block 32, the upper base 41 and the tension unit 44. Through the electrically conductive member, the electrode roller 47 is electrically connected to the upper bus securing part 45, which is formed from an electrically conductive member. Thus, the upper bus securing part 45 functions as a cathode electrode.

Further, the electrically conductive member for electrically connecting the electrode roller 47 and the upper bus securing part 45 is provided with switching means (not shown), so that the electrical connection between the electrode roller 47 and the upper bus securing part 45 can be switched on/off by the switching means. Thus, the voltage application to the buses 50 can be switched on/off for each bus 50 in the electroforming tank 1. Consequently, electroforming performed on each bus 50 can be controlled individually.

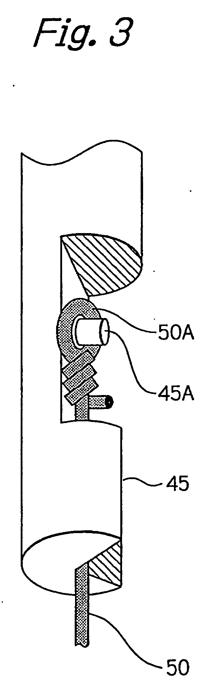

Fig. 3 shows the details of fitting of the bus 50 to the upper bus securing part 45.

As illustrated in the figure, the bus 50 has an annular hook portion 50A formed at an end thereof. The hook portion 50A is engaged with a fitting pin 45A of the upper bus securing part 45, whereby the bus 50 is fitted to the upper bus securing part 45. It should be noted that fitting of the bus 50 to the lower bus securing part 46 is effected in the same way. Therefore, a description thereof is omitted.

Next, the electroforming method carried out by the electroforming apparatus of this embodiment will be described with reference to Fig. 4. It should be noted that in Fig. 4, different positions in the electroforming tank 1 are indicated by 10A to 10F. Reference symbols 10A to 10C show positions in the primary electroforming section 1A. Reference symbols 10D to 10F show positions in the secondary electroforming section 1B.

A bus 50 is loaded onto a retaining jig 30 at the loading position X of the jig conveyor 20. The bus 50 loaded on the retaining jig 30 is carried into the primary electroforming section 1A of the electroforming tank 1 by circulation of the belt 23. The bus 50 moves successively from the position 10A toward the position 10C in the primary electroforming section 1A while rotating about its own axis at a predetermined rotational speed.

Meanwhile, an appropriate voltage is applied between the anode electrodes 16 and the cathode electrode (i.e. the upper bus securing part 45) so that an appropriate current density is produced in the electrolyte 2. Consequently, an electrolytically deposited substance is deposited on the periphery of the bus 50 by electroforming. Thus, a primarily electroformed piece 51 is gradually formed. During this process, the bus 50 is driven to rotate about its own axis at a predetermined rotational speed (e.g. 15 rpm or an appropriate value therebelow). Thus, it is possible to improve the circumferential uniformity of the primarily electroformed piece 51 formed on the periphery of the bus 50.

As illustrated in the figure, an air bubble layer 12 is formed on the surface 3 of the electrolyte 2 at the positions 10A and 10B by air bubbles generated from the air supply device 11. In the air bubble layer 12, a tapered portion 52 at the upper end of the primarily electroformed piece 51 is shaped. That is, the current density in the air bubble layer 12 is lower than that in the electrolyte 2 below the air bubble layer 12. Therefore, the amount of electrolytically deposited substance in the air bubble layer 12 is smaller than in the electrolyte 2. This phenomenon is used to form a tapered portion 52 smaller in diameter than the body of the primarily electroformed piece 51.

More specifically, the bus accommodating unit 33, together with the bus 50, is moved vertically by the actuators 35, thereby adjusting the ratio of the time that each portion at the upper end of the primarily electroformed piece 51 is put in the air bubble layer 12 to the time that it is dipped in the electrolyte 2. Consequently, the closer to the upper end of the primarily electroformed piece 51, the longer the time of dipping in the air bubble layer 12. As a result, a tapered portion 52 is formed at the upper end of the primarily electroformed piece 51.

In this embodiment, the tapered portion 52 is shaped by vertically moving the bus 50. It should be noted, however, that the present invention is not limited to the described mode of shaping the tapered portion 52. For example, the tapered portion 52 may be shaped by varying the height of the air bubble layer 12 by the control of the amount of air bubbles supplied from the air supply device 11. It is also possible to shape the tapered portion 52 by a combination of the vertical movement of the bus 50 and the adjustment of the height of the air bubble layer 12.

When a primarily electroformed piece 51 of predetermined size has been formed, the voltage application to the bus 50 is stopped. Thereafter, the bus 50 is carried through the primary electroforming section 1A for a while, as shown at the position 10C, so that an oxide film is formed on the periphery of the primarily electroformed piece 51 during this period of time. The oxide film thus formed facilitates the operation of separating the primarily electroformed piece 51 and a secondarily electroformed piece 53 from each other, which will be performed later. It should be noted that the primarily electroformed piece 51 may be once taken out from the electrolyte 2 so that an oxide film is formed on the periphery of the primarily electroformed piece 51 even more effectively.

Subsequently, the bus 50 descends across the step 24 and is carried into the secondary electroforming section 1B. In the secondary electroforming section 1B, an appropriate voltage is applied between the anode electrodes 16 and the cathode electrode (i.e. the upper bus securing part 45) again. Consequently, while the bus 50 is being conveyed successively from the position 10D to 10F, a secondarily electroformed piece 53 is gradually formed on the peripheries of the bus 50 and the primarily electroformed piece 51. The secondarily electroformed piece 53 formed in this way has a hollow portion 54 patterned on the primarily electroformed piece 51 and the bus 50 and further has a tapered spot-faced portion 55 in the hollow portion 54.

Upon completion of the formation of the secondarily electroformed piece 53 as a tubular member as described above, the bus 50, together with the primarily electroformed piece 51 and the secondarily electroformed piece 53, is taken out from the electroforming tank 1. Then, the bus 50 and the primarily electroformed piece 51 are separated from the secondarily electroformed piece 53. Further, the secondarily electroformed piece 53 is subjected to cleaning and drying. The secondarily electroformed piece 53 may further be subjected to shaping, according to need. Thus, as shown in Fig. 5(A), a ferrule 61 having a tapered spot-faced portion 62A in a hollow portion 62 is completed.

Thus, according to this embodiment, the tapered portion 52 of the primarily electroformed piece 51 is formed in the air bubble layer 12, and the spot-faced portion 55 patterned on the tapered portion 52 is formed in the hollow portion 54 of the secondarily electroformed piece 53. Therefore, the hollow portion 54 of the secondarily electroformed piece 53 (i.e. the hollow portion 62 of the ferrule 61) can readily be formed into a desired configuration with high accuracy. Accordingly, it becomes unnecessary to perform troublesome fabrication process or the like. Thus, the production cost can be reduced. In addition, shaping of the tapered portion 52 in the air bubble layer 12 can be attained with a simplified arrangement because it is performed by controlling the vertical movement of the bus 50 or adjusting the thickness of the air bubble layer 12. Furthermore, because the secondarily electroformed piece 53 is removed from the primarily electroformed piece 51 and the bus 50 in the electrolyte 2, the removing operation can be executed smoothly.

Although in this embodiment the electroforming tank 1 has the primary electroforming section 1A and the secondary electroforming section 1B to perform electroforming in two steps, it should be noted that the present invention is not limited to the described embodiment, and electroforming may be performed in three or more steps (N) to obtain an N th-order electroformed piece having spot-faced portions formed in an (N-1)-step structure. That is, the arrangement may be as follows. N electroforming sections are provided in the electroforming tank, and a higher-order electroformed piece [(n+1) th-order electroformed piece] is successively formed on an electroformed piece (nth-order electroformed piece) formed in the preceding electroforming section (n th-order electroforming section), thereby obtaining an (N-1) th-order electroformed piece having tapered portions formed in an (N-1)-step structure. Then, an Nth-order electroformed piece having spot-faced portions formed in an (N-1)-step structure is formed on the (N-1) th-order electroformed piece. For example, primary to tertiary electroforming sections are provided in the electroforming tank to form a tertiarily electroformed piece on a secondarily electroformed piece, thereby obtaining, as shown in Fig. 5(B), a ferrule 71 having spot-faced portions 72A and 72B formed in a two-step structure in a hollow portion 72.

## Claims

1. An electroforming apparatus comprising:
an electroforming tank filled with an electrolyte;
bubble region forming means for forming a bubble region on a top of the electrolyte filled in the electroforming tank;
positioning means for positioning a pattern member for electroforming in said electroforming tank so that at least a part of the pattern member is put in said bubble region;
a first electrode electrically connected to said pattern member;
a second electrode provided in said electroforming tank;
a power supply for applying a voltage between said first electrode and said second electrode; and
shaping means for shaping an electroformed piece formed around a periphery of said pattern member in said bubble region.

2. An electroforming apparatus according to claim 1, wherein said shaping means shapes the electroformed piece formed around the periphery of said pattern member by controlling vertical movement of said pattern member.

3. An electroforming apparatus according to claim 1 or 2, wherein said shaping means shapes the electroformed piece formed around the periphery of said pattern member by varying a thickness of said bubble region.

4. An electroforming apparatus according to any one of claims 1 to 3, wherein electroforming is further performed by using the electroformed piece shaped by said shaping means as a pattern member.

5. An electroformed piece formed by the electroforming apparatus according to any one of claims 1 to 4.

6. A tubular member for an optical fiber connector terminal, said tubular member being formed by the electroforming apparatus according to any one of claims 1 to 5.

7. An electroforming method wherein a bubble region is formed in an upper part of an electroforming tank; a pattern member for electroforming is positioned in said electroforming tank so that at least a part of the pattern member is put in said bubble region; and an electroformed piece formed around a periphery of said pattern member is shaped in said bubble region.

8. An electroforming method according to claim 7, wherein the electroformed piece formed around the periphery of said pattern member is shaped in said bubble region by vertically moving said pattern member.

9. An electroforming method according to claim 7 or 8, wherein the electroformed piece formed around the periphery of said pattern member is shaped in said bubble region by adjusting a thickness of said bubble region.

10. An electroforming method according to any one of claims 7 to 9, wherein electroforming is further performed by using the electroformed piece shaped in said bubble region as a pattern member.

11. An electroformed piece formed by the electroforming method according to any one of claims 7 to 10.

12. A tubular member for an optical fiber connector terminal, said tubular member being formed by the electroforming method according to any one of claims 7 to 10.
